(19) Europäisches Patentamt
European Patent Office
Office européen des brevets

(11) **EP 1 837 263 A2**

(12) **EUROPEAN PATENT APPLICATION**

(43) Date of publication:
**26.09.2007 Bulletin 2007/39**

(51) Int Cl.:
*B60W 20/00* (2006.01)   *B60K 6/04* (2006.01)
*B60W 30/02* (2006.01)   *B60W 10/06* (2006.01)
*B60W 10/08* (2006.01)   *B60W 10/06* (2006.01)
*B60W 10/08* (2006.01)

(21) Application number: **07001797.5**

(22) Date of filing: **26.01.2007**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **20.03.2006 JP 2006075873**

(71) Applicant: **HITACHI, LTD.**
**Chiyoda-ku**
**Tokyo 100-8280 (JP)**

(72) Inventors:
• **Imura, Shinya**
**c/o Hitachi, Ltd., Int. Prop. Group**
**Chiyoda-ku**
**Tokyo 100-8220 (JP)**
• **Matsuzaki, Norikazu**
**Hitachi, Ltd., Int. Prop. Group**
**Chiyoda-ku**
**Tokyo 100-8220 (JP)**
• **Itoh, Kohei**
**c/o Hitachi Car Engineering Co., LTD**
**Ibaraki-Ken, 312-0062 (JP)**
• **Fujiwara, Shin**
**c/o Hitachi Car Engineering Co., LTD**
**Ibaraki-Ken, 312-0062 (JP)**

(74) Representative: **Beetz & Partner**
**Steinsdorfstrasse 10**
**D-80538 München (DE)**

(54) **Vehicle control unit and vehicle**

(57) The invention relates to a vehicle control unit provided with a motor (7) applying a power to a rear wheel (4a, 4b), in order to obtain sufficient driving force and braking force in a range in which the rear wheel (4c, 4d) does not slip sideways at a time when a vehicle turns, a motor (7) torque is continuously controlled by calculating a rear wheel (4c, 4d) braking and driving force in the range in which the rear wheel (4c, 4d) does not slip sideways on the basis of a vehicle turning amount and a front wheel (4a, 4b) torque. Specifically, an absolute value of the motor (7) torque is made smaller in accordance with an increase of the vehicle turning amount, and an absolute value of the motor (7) torque is made larger in accordance with an increase of an absolute value of the front wheel (4a, 4b) torque.

FIG.1

EP 1 837 263 A2

**Description**

Field of The Invention

The present invention relates to a vehicle control unit provided with a motor applying a power to a rear wheel, and more particularly to a control method of a motor torque at a time when a vehicle turns.

Description of Related Art

As a control method of a rear wheel braking force at a time when the vehicle turns, there is a method, for example, disclosed in JP-A-7-215188. In this method, a risk of a side slip of a rear wheel is reduced by shutting off a bypass passage of a brake piping so as to make the rear wheel braking force small, at a time when a vehicle lateral acceleration gets over a previously set threshold value.

However, in an on-off control of switching a shutoff of the bypass passage of the brake piping such as the method disclosed in JP-A-7-215188, it is difficult to control the braking force up to a limit where the rear wheel slips sideways.

Brief Summary of The Invention

An object of the present invention is to make it possible to obtain a sufficient braking force, and further a driving force within a range in which a rear wheel does not slip sideways at a time when a vehicle turns.

In order to achieve the object mentioned above, in accordance with the present invention, there is provided a vehicle control unit provided with a motor applying a power to a rear wheel. The vehicle control unit may control the motor in such a manner that a torque of the motor continuously changes in response to a change of a steering angle at a time when a vehicle turns.

Further, in order to achieve the object mentioned above, in accordance with the present invention, there is provided a vehicle in which a front wheel is driven by an engine and/or a rear wheel is driven by a motor, wherein the vehicle comprises:

a front wheel driving torque detecting means detecting a driving torque of the front wheel;
an accelerator pedal sensor detecting whether or not an accelerator pedal is pushed down;
a steering angle sensor detecting a steering angle;
a motor torque detecting means detecting a torque of the motor; and/or
a control unit controlling the motor in such a manner that an absolute value of the motor torque becomes continuously smaller in accordance with an increase of the steering angle under a condition that the front wheel torque is fixed.

In accordance with the present invention, it is possible to obtain a sufficient braking force and a driving force within a range in which the rear wheel does not slip sideways, by continuously controlling the motor torque, at a time when the vehicle turns.

The vehicle control unit in accordance with the present invention is provided with the motor control means continuously controlling the motor torque at a time when the vehicle turns. At this time, it is preferable to be provided with a motor control means making an absolute value of the motor torque small in accordance with an increase of a vehicle turning amount. Further, it is preferable to be provided with a motor control means making an absolute value of the motor torque large in accordance with an increase of an absolute value of the front wheel torque. Further, it is preferable to be provided with a motor control means making an absolute value of the motor torque small in accordance with a decrease of a rear wheel load. Further, it is preferable to be provided with a vehicle turning amount calculating means calculating a vehicle turning amount on the basis of a vehicle lateral acceleration. Further, it is preferable to be provided with a vehicle turning amount calculating means calculating a vehicle turning amount on the basis of a steering angle and a vehicle speed. Further, it is preferable to be provided with a vehicle turning amount calculating means calculating a vehicle turning amount on the basis of a yaw rate and a vehicle speed. Further, it is preferable to be provided with a vehicle turning amount calculating means calculating a vehicle turning amount on the basis of a rotational speed of a wheel. Further, it is preferable to be provided with a front wheel torque calculating means calculating a front wheel torque on the basis of states of an engine, a generator attached to the engine and a transmission. Further, it is preferable to be provided with a front wheel torque calculating means calculating a front wheel torque on the basis of a state of a brake. Further, it is preferable to be provided with a rear wheel load calculating means calculating a rear wheel load on the basis of a vehicle longitudinal acceleration and a road surface inclination. Further, it is preferable to be provided with a rear wheel load calculating means calculating a rear wheel load on the basis of a vehicle longitudinal acceleration, a front wheel torque and a motor torque.

In accordance with the present invention, there is provided a vehicle in which a front wheel is driven by an engine, and/or a rear wheel is driven by a motor, wherein the vehicle comprises:

> a front wheel driving torque detecting means detecting a driving torque of the front wheel;
> an accelerator pedal sensor detecting whether or not an accelerator pedal is pushed down;
> a steering angle sensor detecting a steering angle;
> a motor torque detecting means detecting a torque of the motor; and/or
> a control unit controlling the motor in such a manner that an absolute value of the motor torque becomes continuously smaller in accordance with an increase of the steering angle under a condition that the front wheel torque is fixed.

The above features can be combined in any way partly or as a whole.
Other objects, features and advantages of the invention will become apparent from the following description of the embodiments of the invention taken in conjunction with the accompanying drawings.

Brief description of the several views of the drawing

> Fig. 1 is a view showing an example of a structure of a vehicle to which an embodiment 1 in accordance with the present invention is applied;
> Fig. 2 is a view showing an example of a control executed by a motor controller;
> Fig. 3 is a view showing an example of a determining method of a target braking torque;
> Fig. 4 is a view showing an example of a rear wheel braking force at a time when an accelerator pedal is not pushed down;
> Fig. 5 is a view showing an example of a structure of a vehicle to which an embodiment 2 in accordance with the present invention is applied; and
> Fig. 6 is a view showing an example of a structure of a vehicle to which an embodiment 3 in accordance with the present invention is applied.

Detailed description of the invention

A description will be specifically given below of embodiments.

Embodiment 1

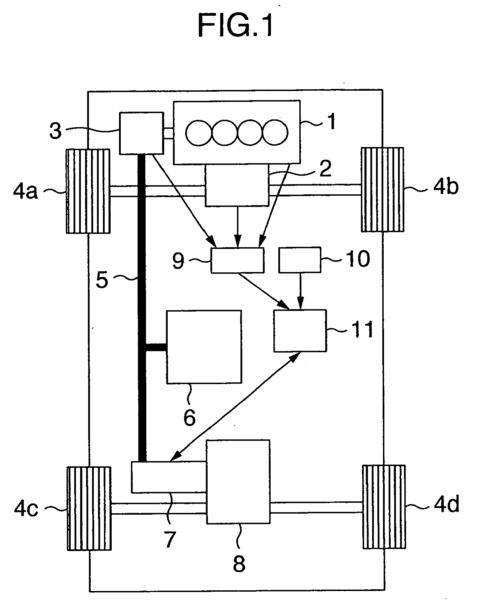

Fig. 1 shows a structure example of a vehicle to which the present invention is applied.
A power generated from an engine 1 is transmitted to a transmission 2 and a generator 3. The power transmitted to the transmission 2 is distributed into left and right sides so as to be transmitted to front wheels 4a and 4b. The generator 3 executes a power generation by using the power transmitted from the engine 1, and supplies an electric power to an energy storage 6 and a motor 7 via an electric power line 5.
The energy storage 6 is constituted by a means for storing an energy such as a battery, a capacitor and the like, and a means constituted by a switch and a controller controlling the switch and controlling an acceptance and a discharge of the electric power. The stored electric power may be used for driving the motor 7, or may be used for the other electric devices (a starter, a blower and the like) provided in a vehicle.
The motor 7 executes a power running or a regeneration in accordance with a command of a motor controller 11. When the motor 7 executes the power running, the electric power supplied from the generator 3 and the energy storage 6 is used. When the motor 7 executes the regeneration, the electric power is supplied to the energy storage 6.
The torque generated by the power running or the regeneration of the motor 7 is distributed into left and right sides via a rear differential gear 8 so as to be transmitted to rear wheels 4c and 4d.

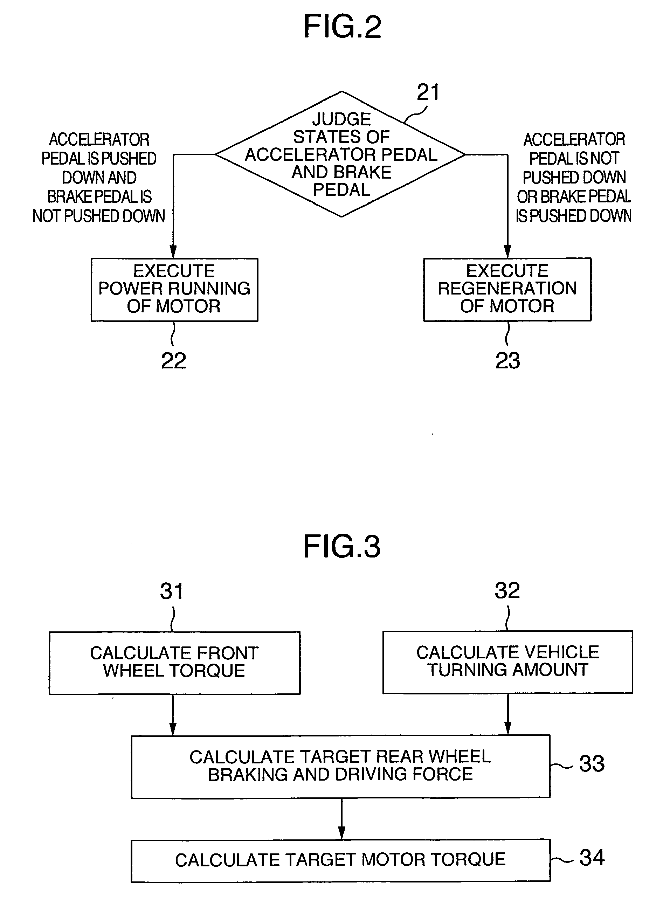

Fig. 2 shows an example of a control executed by the motor controller 11.
First, a state of an accelerator pedal and a brake pedal are judged in a block 21. The judgment of the state of the accelerator pedal may be executed on the basis of an output of an accelerator pedal sensor detecting a push down amount, and the judgment of the brake pedal may be executed on the basis of an output of a brake pedal sensor outputting an ON signal in the case that the brake pedal is pushed down and outputting an OFF signal in the case that the brake pedal is not pushed down. In this case, the accelerator pedal sensor can detect whether or not the accelerator pedal is pushed down, by detecting the push down amount.
When the accelerator pedal is pushed down and the brake pedal is not pushed down, the power running of the motor 7 is executed in a block 22. In the case that the front wheels and the rear wheels hardly have a difference of rotational speeds, it is expected to be possible to sufficiently travel only by the front wheels. Accordingly, it is not necessary to execute the power running of the motor 7. The difference of the rotational speeds between the front wheels and the rear wheels can be detected by using a rotational speed sensor provided in each of the wheels.

When the accelerator pedal is not pushed down and an engine brake is applied, or when the brake pedal is pushed down, the motor 7 is regenerated in a block 23. In the case that an energy stored in the energy storage 6 is large, and it is impossible to store any more, the rear wheel torque may be generated by the brake without regenerating the motor 7.

Fig. 3 shows an example of a method of determining a target torque of the motor 7 at a time of the power running or the regeneration of the motor 7. In this case, a calculation of a block 31 is executed by a front wheel torque calculating means 9, a calculation of a block 32 is executed by a vehicle turning amount calculating means 10, and calculations of blocks 33 and 34 are executed by the motor controller 11. Further, in the following description, torques, and braking and driving forces are expressed on the assumption that a direction of driving the vehicle is set to positive and a direction of braking the vehicle is set to negative.

A total torque Tf of the right and left front wheels is calculated in a block 31. The front wheel torque Tf is calculated in accordance with the following expression on the basis of an engine torque Te, a generator torque Tg, a generator pulley ratio Rg, a transmission gear ratio Rt and a brake torque Tb (a total torque of the right and left sides).

$$Tf = (Te + Tg \times Rg) \times Rt + Tb$$

The engine torque Te is determined on the basis of an accelerator opening degree and an engine speed by using a previously set engine torque map. The engine torque Te indicates a positive value in most cases at a time when the accelerator pedal is pushed down, and indicates a negative value in most cases at a time when the accelerator pedal is not pushed down. When the accelerator pedal is not pushed down, there is a tendency that the higher the engine speed is, the larger an engine friction torque becomes, and the smaller the engine torque Te is (the larger an absolute value of the Te is).

The generator torque Tg generally becomes a negative value. It is determined on the basis of a rotational speed of the generator and a power generating amount of the generator by using a previously set generator torque map. There is a tendency that the lower the rotational speed of the generator is, or the larger the power generating amount of the generator is, the smaller the generator torque Tg becomes (the larger an absolute value of the Tg is).

The transmission gear ratio Rt corresponds to a value obtained by multiplying a transmission gear ratio of the current gear position by a final gear ratio.

The brake torque Tb generally becomes a negative value. It is determined on the basis of the push down amount of the brake pedal by using a previously set brake torque map. There is a tendency that the larger the push down amount of the brake pedal is, the smaller the brake torque Tb becomes (the larger an absolute value of the Tb is).

A vehicle turning amount ay is calculated in a block 32. The vehicle turning amount ay is constituted by a current value of a vehicle lateral acceleration or an estimated value of the vehicle lateral acceleration. In the case that the vehicle turning amount ay is constituted by the estimated value of the vehicle lateral acceleration, it is possible to do away with an influence caused by a response delay existing in the motor 7, or reduce the influence.

The current value of the vehicle lateral acceleration is measured by using a lateral acceleration sensor. Alternatively, it is calculated in accordance with an expression V x V/r on the basis of a vehicle speed V and a turning radius r. The turning radius r is determined on the basis of the vehicle speed V and a steering angle, or the vehicle speed V and a yaw rate, or the vehicle speed V and a difference of rotational speeds between inner and outer wheels, by using a previously set map. Accordingly, the vehicle may be approximately provided with a lateral acceleration sensor, a steering angle sensor, a yaw rate sensor or the like, or a necessary information may be determined in accordance with a calculation on the basis of an output of the other sensor.

An estimated value of the vehicle lateral acceleration is calculated in accordance with an expression V x V/r' on the basis of the vehicle speed V and an estimated value r' of the turning radius. The estimated value r' of the turning radius is determined on the basis of the vehicle speed V and the steering angle by using a previously set map. Since there has time until the lateral acceleration is actually generated after the steering is executed, it is possible to determine the estimated value of the vehicle lateral acceleration.

A target value Fr of total braking and driving force of the rear wheels on the right and left sides is calculated in a block 33. When the front wheel torque Tf is positive (when driving the vehicle), the target rear wheel braking and driving force Fr is calculated in accordance with the following Expression 1 on the basis of the front wheel torque Tf, the turning amount ay, a tire radius rt and previously set constants k1 and k2.

$$Fr = \sqrt{k1 \times (Tf \times rt)^2 - k2 \times ay^2} \qquad \text{(Expression 1)}$$

When the front wheel torque Tf is negative (when braking the vehicle), the target rear wheel braking and driving force Fr is calculated in accordance with the following Expression 2 on the basis of the front wheel torque Tf, the turning amount ay, the tire radius rt and previously set constants k3 and k4.

$$Fr = -\sqrt{k3 \times (Tf \times rt)^2 - k4 \times ay^2} \qquad \text{(Expression 2)}$$

In the case that a result of calculation in a root becomes negative in both of (Expression 1) and (Expression 2), the value Fr is set to 0.

If the rear wheel braking and driving force is fixed, the rear wheel tends to slip sideways in accordance with an increase of the vehicle turning amount. However, since the absolute value of the rear wheel braking and driving force becomes smaller in accordance with the increase of the vehicle turning amount by using the expression, it is possible to reduce a possibility of a side slip of the rear wheel. Further, if this expression is used, the absolute value of the rear wheel braking and driving force is small in the case that the absolute value of the front wheel torque is small. Accordingly, if a driver operates in such a manner as to prevent the front wheels from slipping sideways, the rear wheels tend to be hard to slip sideways.

Further, k1 and k3 may be determined on the basis of the rear wheel load in place of being set to the constants. Since it is necessary to make the rear wheel braking and driving force smaller in accordance with a reduction of the rear wheel load, it is possible to determine by using a map which is set such that k1 and k3 become smaller in accordance with the reduction of the rear wheel load.

The rear wheel load is determined on the basis of a contraction amount of a suspension in the rear wheel. Alternatively, it is calculated in accordance with an expression mr x g + m x g x h/l x (ax + tanθ) on the basis of a vehicle weight m, a weight mr applied to the rear wheel at a time of resting on a flat road, a gravitational acceleration g, a height h of center of gravity of the vehicle, a wheelbase 1, a vehicle longitudinal acceleration ax, and a road surface inclination θ (θ is positive on a climbing road). The road surface inclination θ is measured by using an inclination sensor. Alternatively, it may be calculated in accordance with an expression arcsin {F/(m x g) - ax/g} on the basis of the vehicle weight m, the gravitational acceleration g, the vehicle longitudinal acceleration ax and a vehicle total braking and driving force F (a sum of a front wheel braking and driving force Ff and a rear wheel braking and driving force Fr).

Further, in the block 33, it is possible to determine by using a map previously formed on the basis of (expression 1) and (expression 2) in place of calculating in accordance with (expression 1) and (expression 2).

A target torque Tm of the motor 7 is calculated in a block 34. The target torque Tm of the motor 7 is calculated in accordance with the following expression on the basis of a target rear wheel braking and driving force Fr, a tire radius rt, and a gear ratio Rr of a rear differential gear 8.

$$Tm = Fr \times rt \times Rt$$

The target torque Tm of the motor 7 is determined in accordance with the above manner. The motor controller 11 executes a power running or a regeneration of the motor 7 on the basis of this value.

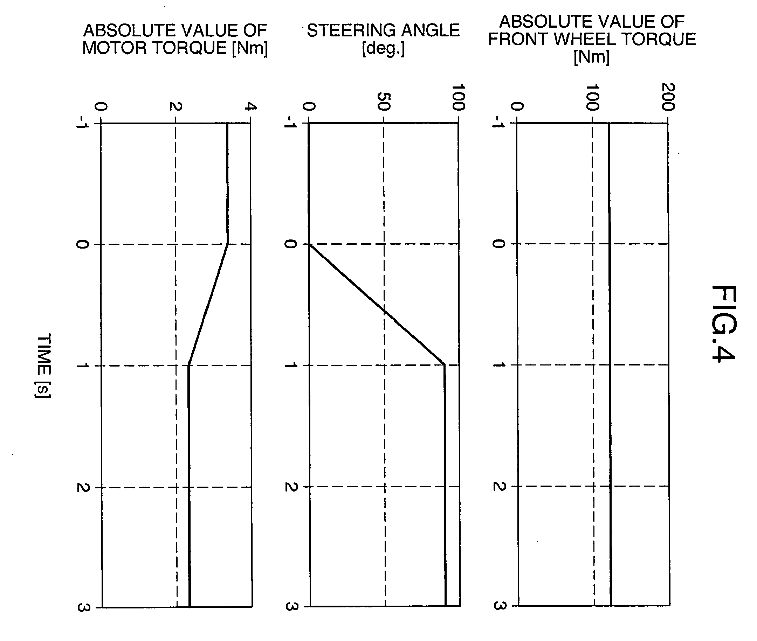

Fig. 4 shows an example of an absolute value of a front wheel torque, a steering angle and an absolute value of a motor torque at a time of traveling without pushing down the accelerator pedal in a vehicle to which the present invention is applied. When the front wheel torque is fixed, the absolute value of the motor torque becomes continuously smaller in accordance with an increase of the steering angle. It is possible to obtain a sufficient braking force within a range in which the rear wheel does not slip sideways, in accordance with the control. The control mentioned above is particularly effective in a downward slope having a low μ in which a great braking force is required under a condition that the rear wheel tends to slip sideways.

Even in the case of traveling while pushing down the accelerator pedal, when the front wheel torque is fixed, the motor torque becomes continuously smaller in accordance with an increase of the steering angle, and it is possible to obtain a sufficient driving force within a range in which the rear wheel does not slip sideways.

As mentioned above, it is possible to obtain the sufficient-driving force and braking force within the range in which the rear wheel does not slip sideways, by continuously controlling the motor torque, at a time when the vehicle turns. Obtaining the sufficient driving force is advantageous in point of an acceleration performance and a climbing performance of the vehicle. Obtaining the sufficient braking force is advantageous in point of a safety and an energy regeneration.

Embodiment 2

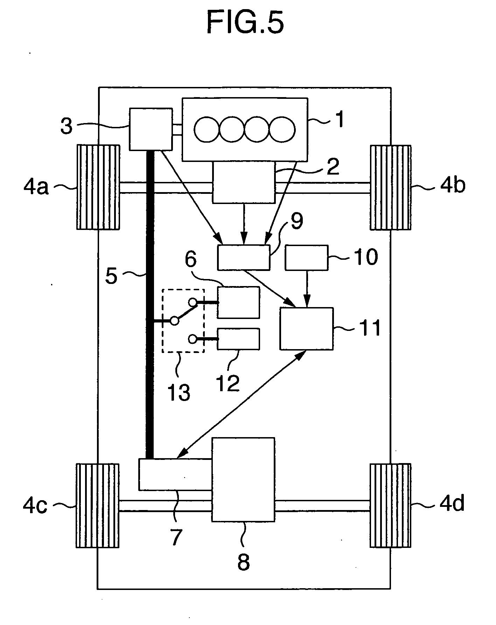

Fig. 5 shows the other structure example of the vehicle to which the present invention is applied.

The structure of Fig. 5 is obtained by adding an energy dissipating means 12 and a changing switch 13 to the structure in Fig. 1.

The energy dissipating means 12 is constituted, for example, by a circuit having a large electric resistance, and can convert the energy regenerated by the motor 7 into heat or the like so as to dissipate it.

The changing switch 13 generally connects the electric power line 5 and the energy storage 6, however, connects the electric power line 5 and the energy dissipating means 12 so as to dissipate the energy regenerated by the motor 7 in the case that the motor executes a regeneration under a condition that the energy stored in the energy storage 6 is large and the energy storage 6 can not store any more.

Further, only the energy dissipating means 12 may be provided without setting the energy storage 6.

Even in the structure in Fig. 5, it is possible to obtain the sufficient driving force and braking force within the range in which the rear wheel does not slip sideways, in the same manner as the structure in Fig. 1.

Embodiment 3

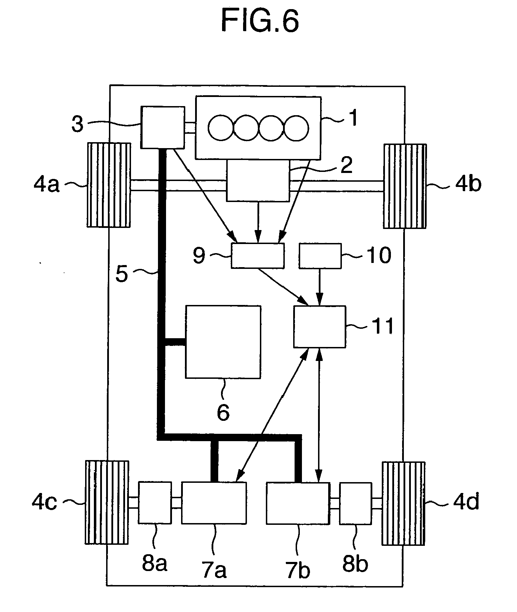

Fig. 6 shows the other structure example of a vehicle to which the present invention is applied.

The structure of Fig. 6 is obtained by setting two motors while doing away with the rear differential gear 8 in the structure shown in Fig. 1.

A motor 7a transmits a torque only to the rear wheel 4c via a reduction gear 8a, and a motor 7b transmits a torque only to the rear wheel 4d via a reduction gear 8b. In this case, the reduction gears 8a and 8b may not be provided.

Each of the motor 7a and the motor 7b is controlled by the motor controller 11. A target torque Tma of the motor 7a and a target torque Tmb of the motor 7b are calculated in accordance with the following expression on the basis of a target rear wheel braking and driving force Fr, a tire radius rt, a reduction gear ratio Rr' of the reduction gears 7a and 7b, and target torque corrected values $\Delta$Tma and $\Delta$Tmb.

$$Tma = (Fr \times rt/2) \times Rr' + \Delta Tma$$

$$Tmb = (Fr \times rt/2) \times Rr' + \Delta Tmb$$

The target rear wheel braking and driving force Fr is determined in accordance with the same method as the embodiment 1.

In the case that the front wheel slips sideways and cannot turn sufficiently at a time of turning to the right, the value $\Delta$Tma is made larger than the value $\Delta$Tmb. In the case that the front wheel slips sideways and cannot turn sufficiently at a time of turning to the left, the value $\Delta$Tmb is made larger than the value $\Delta$Tma. The values $\Delta$Tma and $\Delta$Tmb are determined by using a previously set map on the basis of the vehicle speed, the steering angle, the yaw rate and the like.

Even in accordance with the structure in Fig. 6, it is possible to obtain the sufficient driving force and braking force within the range in which the rear wheel does not slip sideways, in the same manner as the structure in Fig. 1.

It should be further understood by those skilled in the art that although the foregoing description has been made on embodiments of the invention, the invention is not limited thereto and various changes and modifications may be made without departing from the spirit of the invention and the scope of the appended claims.

The above features and embodiments can be combined in any way partly or as a whole.

**Claims**

1. A vehicle control unit provided with a motor (7) applying a power to a rear wheel (4c, 4d), wherein the vehicle control unit controls the motor (7) in such a manner that a torque of the motor (7) continuously changes in response to a change of a steering angle at a time when a vehicle turns.

**2.** A vehicle control unit as claimed in claim 1, the vehicle control unit makes an absolute value of the motor (7) torque small in accordance with an increase of a vehicle turning amount.

**3.** A vehicle control unit as claimed in claim 1 or 2, wherein the vehicle control unit makes an absolute value of the motor (7) torque in accordance with an increase of an absolute value of the front wheel (4a, 4b) torque.

**4.** A vehicle control unit as claimed in at least one of claims 1 to 3, wherein the vehicle control unit makes an absolute value of the motor (7) torque small in accordance with an decrease of a rear wheel (4c, 4d) load.

**5.** A vehicle control unit as claimed in at least one of claims 1 to 4, wherein said vehicle turning amount is determined by calculating in accordance with any one of a calculation on the basis of a vehicle lateral acceleration, a calculation on the basis of a steering angle and a vehicle speed, a calculation on the basis of a yaw rate and a vehicle speed, and a calculation on the basis of a rotational speed of a wheel (4).

**6.** A vehicle control unit as claimed in at least one of claims 1 to 5, wherein said front wheel (4a, 4b) torque is calculated on the basis of states of an engine (1), a generator (3) attached to the engine (1) and a transmission (2).

**7.** A vehicle control unit as claimed in at least one of claims 1 to 6, wherein said front wheel (4a, 4b) torque is calculated on the basis of a state of a brake.

**8.** A vehicle control unit as claimed in at least one of claims 1 to 7, wherein said rear wheel (4c, 4d) load is calculated on the basis of a vehicle longitudinal acceleration and a road surface inclination.

**9.** A vehicle control unit as claimed in at least one of claims 1 to 8, wherein said rear wheel (4c, 4d) load is calculated on the basis of a vehicle longitudinal acceleration, said front wheel (4a, 4b) torque and the motor (7) torque.

**10.** A vehicle in which a front wheel (4a, 4b) is driven by an engine (1), and a rear wheel (4c, 4d) is driven by a motor (7), wherein the vehicle comprises:

    a front wheel driving torque detecting means detecting a driving torque of the front wheel (4a, 4b);
    an accelerator pedal sensor detecting whether or not an accelerator pedal is pushed down;
    a steering angle sensor detecting a steering angle;
    a motor torque detecting means detecting a torque of said motor (7); and
    a control unit controlling said motor (7) in such a manner that an absolute value of the motor (7) torque becomes continuously smaller in accordance with an increase of the steering angle under a condition that the front wheel (4a, 4b) torque is fixed.

EP 1 837 263 A2

# FIG.1

# FIG.2

JUDGE
STATES OF
ACCELERATOR PEDAL
AND BRAKE
PEDAL
21

ACCELERATOR
PEDAL IS PUSHED
DOWN AND
BRAKE PEDAL IS
NOT PUSHED DOWN

ACCELERATOR
PEDAL IS NOT
PUSHED DOWN
OR BRAKE PEDAL
IS PUSHED DOWN

EXECUTE
POWER RUNNING
OF MOTOR

22

EXECUTE
REGENERATION
OF MOTOR

23

# FIG.3

31
CALCULATE FRONT
WHEEL TORQUE

32
CALCULATE VEHICLE
TURNING AMOUNT

CALCULATE TARGET REAR WHEEL
BRAKING AND DRIVING FORCE
33

CALCULATE TARGET MOTOR TORQUE
34

# FIG.4

## FIG.5

EP 1 837 263 A2

# FIG.6

12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 7215188 A